# FASCICULE DE BREVET EUROPEEN

(11) **EP 0 742 684 B1**
(45) Date de publication et mention de la délivrance du brevet: **26.08.1998**
(21) Numéro de dépôt: 95908298.3
(22) Date de dépôt: 01.02.1995
(51) Int. Cl.: A01C 11/02

(54) **DISPOSITIF DE REPIQUAGE RAPIDE DE VEGETAUX**
SCHNELLPFLANZGERÄT FÜR TOPFBALLEN
DEVICE FOR THE FAST PRICKING OUT OF PLANTS

(30) Priorité: 02.02.1994 FR 9401424
(43) Date de publication de la demande: 20.11.1996
(73) Titulaire: Ferrand, Claude, F-06200 Nice (FR)
(72) Inventeur: Ferrand, Claude, F-06200 Nice (FR)
(74) Mandataire: Roman, Michel
(86) Numéro de dépôt international: FR9500123
(87) Numéro de publication internationale: WO9520867

(56) Documents cités:
- EP-A- 0 062 917
- EP-A- 0 475 839
- EP-A- 0 551 232
- FR-A- 2 661 069
- FR-A- 2 682 553

## Description

La présente invention a pour objet un dispositif de repiquage rapide de végétaux selon le préambule de la revendication 1. Un tel dispositif est connu par FR-A-2 682 553.

Il concerne le domaine industriel des machines agricoles, et est destiné au transfert automatique à grande vitesse de très jeunes végétaux en motte.

Dans les dispositifs de repiquage automatique connus à ce jour, la motte avec le plant qui va être repiqué est généralement introduite par le haut dans un élément positionneur ayant pour objet, soit d'amener le végétal au-dessus de l'emplacement où il doit être planté, soit de le retenir provisoirement pour permettre à un système de convoyage d'amener la zone de plantation sous le plant, qui est alors éjecté de l'élément positionneur par un moyen mécanique, pneumatique ou autre dans une cavité ou pré-trou préparé préalablement à cet effet.

Par exemple, le brevet FR-A-2 661 069, du même inventeur, décrit un tel dispositif constitué d'un positionneur vertical dans lequel le jeune végétal est introduit par simple gravité, et d'une tête d'insufflation venant s'ajuster sur l'élément positionneur et permettent d'y injecter de l'air ou un gaz au moment où l'ensemble se trouve au-dessus de l'emplacement de repiquage. Avec ce système, il arrive que le plant tombe à côté du positionneur ou se retourne, ce qui oblige le plus souvent à l'éliminer.

Cette méthode présente en outre l'inconvénient d'engendrer une perte de temps importante. En effet, avant de pouvoir arriver à la phase finale de repiquage, il aura fallu extraire le plant avec des moyens présentant le plus souvent des risques de mutilation de la partie foliaire ou racinaire, et le transporter à son emplacement définitif.

Le brevet FR-A-2 682 553 du nom du même demandeur, décrit un élément positionneur vertical ouvrant formé de deux parties séparées par un plant vertical axial pouvant s'écarter l'une de l'autre, ledit positionneur étant associé, d'une part, à un poussoir vertical apte à y introduire par le bas le jeune végétal avec sa motte lorsqu'il est ouvert, des moyens automatiques appropriés provoquant alors sa fermeture de manière à retenir le plant et, d'autre part, à un éjecteur mécanique chassant vers le bas le végétal dans la zone de plantation en appuyant sur sa motte par l'intermédiaire de tiges dont les extrémités sont pourvues d'un renflement.

A l'usage, ce second système a révélé un défaut important. Dans leur mouvement vertical du haut vers le bas, les tiges de l'éjecteur, avant d'atteindre la motte, sont amenées à frôler la partie foliaire qui est fréquemment endommagée.

Le dispositif selon la présente invention, qui peut être considéré comme un perfectionnement au brevet FR-A-2 682 553, a pour objectif de remédier à ces inconvénients. Il permet en effet d'éviter tout déchet en supprimant tout risque de mutilation de la partie foliaire, tout en assurant une vitesse de repiquage très élevée.

Il est caractérise en ce que l'éjecteur est un éjecteur latéral, et en ce que le postionneur comportant des fentes ou ouvertures disposées de manière à ce que les tiges de l'éjecteur mécanique puissent pénétrer latéralement dans ledit positionneur, pour venir appuyer sur la motte sans toucher la parie foliaire.

Sur les dessins schématiques annexés, donnés à titre d'exemples non limitatifs de formes de réalisation de l'objet de l'invention:
la figure 1 représente en perspective un positionneur conique associé à un éjecteur supérieur à mouvement vertical pourvu d'un manchon coulissant destiné à rapprocher les tiges lorsque leurs extrémités se trouvent au niveau de la partie supérieure de la motte,
les figures 2 et 3 montrent en coupe axiale verticale le même positionneur, respectivement avec les tiges en position haute et basse,
la figure 4 représente en élévation un positionneur cylindrique à élément mobile d'immobilisation, avec éjecteur latéral à mouvement oscillant,
la figure 5 est une coupe transversale suivant les flèches A-A de la figure 4.
la figure 6 représente en élévation un positionneur à élément mobile d'immobilisation, avec éjecteur latéral coulissant solidaire de cet élément mobile,
la figure 7 est une coupe transversale suivant les flèches B-B de la figure 6
et la figure 8 montre, vu d'en haut, la disposition de positionneurs multiples en quinconce.

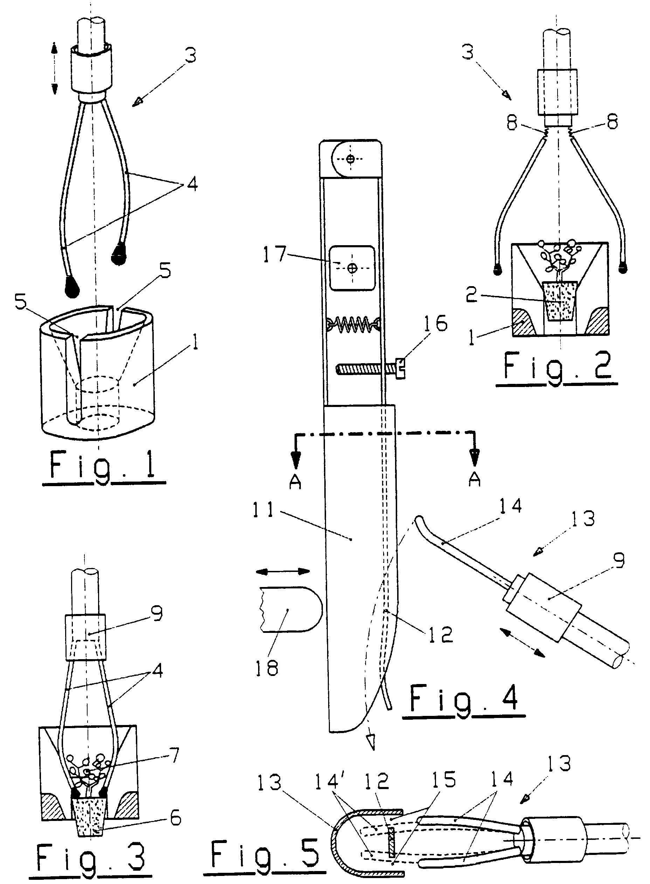

Les figures 1 à 3 ne constituent pas de modes de réalisation de l'invention, mais sont des exemples utiles à la compréhension de l'invention.

Le dispositif, figures 1 à 7, est constitué d'un ensemble formé d'un élément positionneur 1, 11 à passage interne vertical du plant 2, et d'un éjecteur mécanique supérieur 3, ou latéral 13 portant des tiges flexibles ou rigides 4, 14, agencées pour pénétrer latéralement dans le positionneur par des fentes ou ouvertures 5, 15 prévues à cet effet et chasser le plant vers le bas en appuyant sur la motte 6 sans toucher la partie foliaire 7.

Dans un premier mode de réalisation (figures 1 à 3), le passage interne du positionneur 1 est successivement conique en haut et cylindrique en bas, la partie cylindrique inférieure ayant un diamètre légèrement inférieur à celui de la motte 6 de manière à ce que le plant 2 soit retenu à l'intérieur du positionneur.

Au-dessus de ce dernier se trouve un éjecteur 3 à mouvement vertical prolongé vers le bas par au moins deux tiges 4 flexibles, courbées de manière à se trouver éloignées de la partie foliaire 7 du plant lorsque leurs extrémités reposent sur la motte 6.

Les tiges 4 peuvent aussi être soit formées de fils ou lamelles souples, métalliques ou non, soit rigides et articulées ou fixées à l'éjecteur par un ressort 8 ou autre élement élastique assurant leur flexibilité (figure 3).

Le plant 2 est introduit soit par le haut soit par le bas du positionneur 1. Dans le second cas, ledit positionneur est constitué d'au moins deux parties mobiles pouvant s'écarter suffisamment l'une de l'autre pour permettre le passage du végétal avec sa motte. Lorsque ce dernier a atteint sa position, un mécanisme provoque le rapprochement des parties mobiles, de manière à retenir le plant à l'intérieur du positionneur, grâce à sa partie cylindrique inférieure de diamètre réduit. L'ouverture de l'élément positionneur 1 peut s'effectuer par coulissement horizontal des parties mobiles, ou grâce à un système à articulation par double compas, ou par charnière à axe vertical, ou par tout moyen approprié.

Lorsque le plant 2 est en place dans le positionneur 1, l'éjecteur 3 est abaissé jusqu'à ce que l'extrémité des tiges 4 se trouve juste au dessus de la motte 6. Lesdites tiges qui, au repos sont écartées de façon à être éloignées de la partie foliaire 7 et à faciliter l'introduction du plant 2, sont alors rapprochées de manière à passer par les fentes 5, grâce à l'action d'un manchon cylindrique 9 coulissant verticalement autour de la partie supérieure des tiges, de haut en bas pour resserer les tiges, et de bas en haut pour les libérer. Finalement l'éjecteur 3 est à nouveau abaissé pour chasser le plant vers la zone de plantation en le forçant à travers la partie cylindrique du positionneur.

Dans un second mode de réalisation (figures 4 et 5), le passage interne du positionneur 11 a la forme d'une gouttière en "U" fermée par une partie articulée 12 agencée de manière à appuyer grâce à un ressort sur le plant 2 pour l'immobiliser après qu'il ait été introduit à l'intérieur du positionneur. Une butée réglable 16 empêche ladite partie articulée de se refermer sur la partie foliaire 7 lorsque la motte 6 est sortie du dispositif, tout en permettant d'utiliser ce dernier pour des plants de tailles variables. Un dispositif rotatif tel qu'une came, un arbre rotatif 17 carré ou à profil variable, ou un moyen équivalent assure l'écartement de la gouttière et de la partie articulée 12 lors de l'introduction du végétal.

Durant la phase de repiquage, ce dernier est chassé vers la zone de plantation au moyen d'un éjecteur 13 latéral à mouvement oscillant autour d'un axe, et prolongé par deux tiges 14 agencées pour passer par des fentes 15 ménagées entre la partie en "U" du positionneur 11 et la partie articulée 12, durant cette opération, la gouttière est maintenue en position verticale grâce à une butée escamotable 18. La position de l'axe de l'éjecteur 13 et la longueur des tiges 14 sont déterminées pour que l'extrémité de ces dernières puissent venir appuyer sur la motte 6 sans risquer d'endommager la partie foliaire 7.

Comme pour le positionneur conique 1, lesdites tiges peuvent être flexibles, d'abord écartées de façon à passer de chaque côté de la partie articulée 12 en pénétrant dans le positionneur 11, et rapprochées en position basse (en pointillé, repère 14' sur la figure 5) provoquant ainsi le recentrage du plant 2, grâce à l'action d'un manchon cylindrique 9 ou dispositif similaire coulissant axialement le long de l'éjecteur 13.

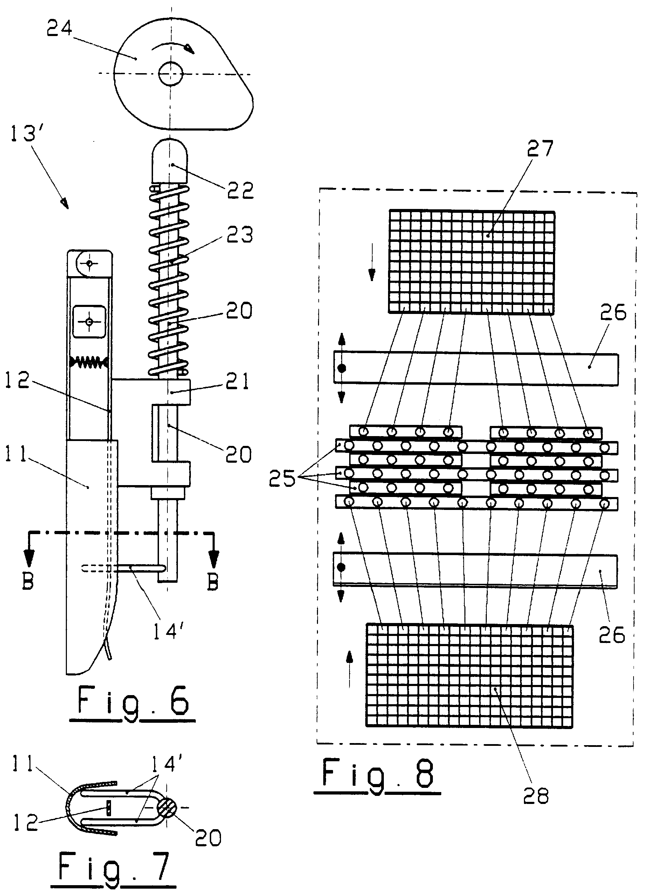

Suivant une variante d'exécution (figures 6 et 7), le plant 2 est chassé vers la zone de plantation au moyen d'un éjecteur 13' latéral à mouvement coulissant vertical, solidaire de la partie articulée 12.

L'éjecteur 13' est formé d'une tige verticale 20 coulissant dans un support 21 fixé sur la partie articulée 12. La tige verticale 20 est terminée à son extrémité supérieure par un embout 22 à tête arrondie ou portant un galet, et porte à sa partie inférieure deux tiges 14' agencées pour passer par les fentes 15 ménagées entre la partie en "U" du positionneur 11 et la partie articulée 12. Un moyen de rappel 23, tel qu'un ressort enfilé sur la tige verticale entre le support 21 et l'embout 22, maintient ladite tige en position haute au repos. La descente de la tige verticale est provoquée par une came 24, un poussoir ou un levier agissant sur l'embout 22.

Les tiges 14' peuvent être flexibles, d'abord écartées de façon à passer de chaque côté de la partie articulée 12 en pénétrant dans le positionneur 11, et rapprochées en position basse (en pointillé, repère 14' sur la figure 7) provoquant ainsi le recentrage du plant 2, grâce à une partie en "U" en forme de cône.

Plusieurs éléments positionneurs 1, 11 fonctionnant simultanément pourront avantageusement être disposés en batterie.

Il est en particulier possible de réunir plusieurs rampes 25 parallèles sur un même bâti, les éléments positionneurs d'une rampe étant disposés en quinconce par rapport aux éléments positionneurs des rampes contigues. Les rampes travaillant simultanément ou alternativement déposent les plants sur des rangées successives en quinconce de la même zone de plantation, mais sont alimentées par des systèmes de transfert 26 à partir de deux casiers, ou plateaux 27, 28 de chargement disposés de part et d'autre de l'ensemble de rampes 25, de manière à permettre à ces dernières de fonctionner sans déplacements latéraux. Les deux plateaux de chargement 27, 28 ont chacun un nombre d'alvéoles différent dans le sens de la longueur et se déplaçent de préférence dans le sens opposé. Cette particularité simplifie considérablement la construction et la mise au point de machines de repiquage à grand débit, tout en leur conférant une fiabilité remarquable.

Le positionnement des divers éléments constitutifs donne à l'objet de l'invention un maximum d'effets utiles qui n'avaient pas été, à ce jour, obtenus par des dispositifs similaires.

## Revendications

1. Dispositif de repiquage rapide de végétaux, destiné au transfert automatique à grande vitesse de très jeunes plants en motte, constitué d'une part, d'un élément positionneur (11) à passage interne vertical du plant (2), formé d'au moins deux parties mobiles pouvant s'écarter l'une de l'autre pour permettre l'introduction du plant, et dans lequel ce dernier peut être immobilisé momentanément, le positionneur (11) étant constitué d'une gouttière fermée par une partie articulée (12) apte à appuyer sur le plant (2) pour l'immobiliser, et, d'autre part, d'un éjecteur (13) mécanique portant au moins deux tiges (4, 14) aptes à pénétrer dans ledit positionneur pour chasser le plant (2) vers la zone de plantation en appuyant sur la motte (6),
caractérisé en ce que l'éjecteur (13) est un éjecteur (13) latéral, et en ce que le positionneur (11) comportant des fentes ou ouvertures (15) disposées de manière à ce que les tiges (14) de l'éjecteur (13) mécanique puissent pénétrer latéralement dans ledit positionneur, pour venir appuyer sur la motte (6) sans toucher la partie foliaire (7).

2. Dispositif selon la revendication 1, se caractérisant par le fait que la gouttière et la partie articulée (12) sont écartées par un moyen approprié, puis maintenues appuyées sur le plant (2) grâce à un ressort, une butée réglable (16) empêchant la partie articulée de se refermer sur la partie foliaire (7) lorsque la motte (6) est sortie du positionneur (11), tout en permettant d'utiliser ce dernier pour des plants de tailles variables.

3. Dispositif selon la revendication 2, se caractérisant par le fait que la gouttière et la partie articulée (12) sont écartées lors de l'introduction du végétal au moyen d'un élément rotatif tel qu'une came ou un arbre rotatif (17) de section carrée ou à profil variable.

4. Dispositif selon l'une quelconque des revendications précédentes, se caractérisant par le fait que, pendant la phase de repiquage, la gouttière est maintenue en position verticale grâce à une butée escamotable (18).

5. Dispositif selon l'une quelconque des revendications précédentes, se caractérisant par le fait que l'éjecteur latéral (13') coulisse verticalement.

6. Dispositif selon la revendication 5, se caractérisant par le fait que l'éjecteur (13') est solidaire de la partie articulée (12).

7. Dispositif selon la revendication 6, se caractérisant par le fait que l'éjecteur latéral (13') est constitué d'une tige verticale (20) coulissant dans un support (21) fixé sur la partie articulée (12), ladite tige verticale étant terminée à son extrémité supérieure par un embout (22) à tête arrondie ou portant un galet et sur lequel agit une came (24), un levier ou un poussoir provoquant la descente de la tige verticale rappelée en position haute de repos par un moyen de rappel (23), celle-ci portant à sa partie inférieure deux tiges (14') agencées pour passer par les fentes (15) ménagées entre la partie en "U" du positionneur (11) et la partie articulée (12).

8. Dispositif selon la revendication 7, se caractérisant par le fait que le moyen de rappel (23) est un ressort enfilé sur la tige verticale (20) entre le support (21) et l'embout (22).

9. Dispositif selon l'une quelconque des revendications 1 à 4, se caractérisant par le fait que l'éjecteur latéral (13) portant les deux tiges (14) oscille autour d'un axe, la position de cet axe et la longueur des tiges (14) étant déterminées pour que l'extrémité de ces dernières puissent venir appuyer sur la motte (6) sans risquer d'endommager la partie foliaire (7).

10. Dispositif selon la revendication 9, se caractérisant par le fait que les tiges (14) sont flexibles, initialement écartées de façon à passer de chaque côté de la partie articulée (12) en pénétrant dans le positionneur (11), puis rapprochées en position basse (repère 14') grâce à l'action d'un manchon cylindrique (9) coulissant axialement le long de l'éjecteur (13), ou système équivalent, de manière à provoquer le recentrage du plant (2).

11. Dispositif selon l'une quelconque des revendications précédentes, se caractérisant par le fait que plusieurs rampes (25) parallèles constituées chacune de plusieurs éléments positionneurs (11) sont montées sur un même bâti, les éléments positionneurs d'une rampe étant disposés en quinconce par rapport aux éléments positionneurs des rampes contigues, les rampes, travaillant simultanément ou alternativement, déposant les plants sur des rangées successives en quinconce de la même zone de plantation et étant alimentées à partir de deux plateaux de chargement (27, 28) disposés de part et d'autre de l'ensemble de rampes (25) de manière à permettre à celles-ci de fonctionner sans déplacements latéraux.

12. Dispositif selon la revendication 11, se caractérisant par le fait que les deux plateaux de chargement (27, 28) ont chacun un nombre d'alvéoles différent dans le sens de la longueur et se déplacent dans le sens oppose.

## Claims

1. Device for fast planting of seedlings, intended for high-speed automatic transfer of very young plants in root earth, consisting on the one hand of a positioning element (11) with vertical internal passage for the plant (2), formed of at least two mobile parts which may be opened to allow the introduction of the plant, and in which the latter can be momentarily held, the positioner (11) consisting of a gutter closed by an articulated part (12) able to press on the plant (2) to immobilise it and, on the other, of an ejector (13) operated mechanically by two stems (4, 14) at least, able to penetrate into the said positioner in order to force the plant (2) out towards the planting zone by pressing on the root earth (6),
characterized in that the ejector (13) is a side ejector and in that the positioner (11) has slots or openings (15) arranged so that the stems (14) of the mechanical ejector (13) can penetrate laterally into the said positioner in order to press on the root earth (6) without touching the leaf part (7).

2. Device as per claim 1 characterized in that the gutter and articulated part (12) are separated by an appropriate means, and then kept pressed on the plant (2) through the action of a spring, an adjustable stops (16) preventing the articulated part from closing on the leafy part (7) when the root earth (6) is removed from positioner (11), while enabling the latter to be used for plants with variable sizes.

3. Device as per claim 2 characterized by the gutter and articulated part (12) being kept separate on introducing the plant by the action of a rotary element such as a cam or rotating stem (17) of square section or with variable profile.

4. Device as per any one of the aforesaid claims, characterized in that during the replanting phase, the gutter is held in the vertical position through a retractable stop (18).

5. Device as per any one of the aforesaid claims, characterized in that the side ejector (13') slides vertically.

6. Device as per claim 5 characterized in that ejector (13') is an integral part of the articulated part (12).

7. Device as per claim 6, characterized in that the side ejector (13') consists of a vertical stem (20) sliding in a support (21) secured on articulated part (12), the said vertical shaft being terminated in its upper part by an end piece (22) with round head or carrying a roller and on which acts a cam (24), a lever or a pushing system causing downward movement of the vertical stem which is brought back to the upper rest position by return means (23), this having in its lower part two stems (14') arranged to pass through slots (15) in the "U" part of the positioner (11) and the articulated part (12).

8. Device as per claim (7) characterized in that the return means (23) is a spring threaded on the vertical shaft (20) between the support (21) and the end piece (22).

9. Device as per any one of claims 1 to 4 characterized in that side ejector (13) has two shafts (14) oscillating around a pin, the position of this pin and the length of the shafts (14) being determined so that the end of the latter can press on the root earth (6) without damaging the leafy part (7) of the plant.

10. Device as per claim 9 characterized in that shafts (14) are flexible, initially separated in order to pass on each side of the articulated part (12) by penetrating into positioner (11), and then brought to the lower position (14' reference) through the action of a cylindrical sleeve (9) sliding axially along ejector (13), or equivalent system, so as to cause recentring of the plant (2).

11. Device as per any one of the aforesaid claims, characterized in that several parallel ramps (25), each one consisting of several positioners (11) are fitted on the same frame, the positioning elements of one ramp being in a staggered arrangement relative to the positioning elements of the adjoining ramps, the ramps working simultaneously or alternately, arranging the plants on successive staggered rows of a same zone of planting and being supplied from two loading plates (27, 28) arranged in either side of the ramp assembly (25) in order to allow the latter to operate without side movements.

12. Device as per claim 11, characterized in that two loading plates (27, 28) have each one a different number of cells in the lengthwise direction and moving in the opposing direction.

## Patentansprüche

1. Vorrichtung zum schnellen Versetzen von Pflanzen, bestimmt zum automatischen Transfer mit hoher Geschwindigkeit von sehr jungen Setzlingen mit ihrem Erdballen, bestehend einerseits aus einem Setzelement (11) mit internem vertikalen Durchgang des Setzlings (2), gebildet aus mindestens zwei beweglichen Teilen, die sich von einander spreizen können, um die Einführung des Setzlings zu erlauben, und in dem dieser letztere zeitweise festgehalten werden kann, wobei das Setzelement (11) aus einer durch einen gelenkigen Teil (12) besteht, geeignet auf den Setzling (2) zu drücken, um ihn zu immobilisieren und, andererseits, einem mechanischen Auswerter (13) mit mindestens zwei Stangen (4, 14), dazu geeignet in das besagte Setzelement einzudringen, um den Setzling (2) durch Drücken auf den Erdballen (6) in den Setzbereich auszustoßen, dadurch gekennzeichnet, daß das Setzelement (11) aus einer Rinne gebildet wird, die durch einen gelenkigen Teil (12) geschlossen wird, geeignet auf den Setzling (2) zu drücken, um ihn festzuhalten, der Auswerfer (13) ein seitlicher Auswerfer (13) ist und das Setzelement (11) mit Schlitzen bzw. Öffnungen (15) versehen ist, die so angeordnet sind, daß die Stangen (14) des mechanischen Auswerfers (13) seitlich in das besagte Setzelement eindringen können, um auf den Erdballen (6) zu drücken ohne den Blatteil (7) des Setzlings zu berühren.

2. Vorrichtung gemäß Anspruch 1, dadurch gekennzeichnet, daß die Rinne und der gelenkige Teil (12) durch ein geeignetes Mittel gespreizt und dann mittels einer Feder auf den Setzling (2) gedrückt gehalten werden, wobei ein einstellbarer Anschlag (16) verhindert, daß sich der gelenkige Teil über dem Blatteil (7) schließt, wenn der Erdballen (6) aus dem Setzelement (11) ausgestoßen ist, und ermöglicht, dieses letztere für Setzlinge unterschiedlicher Größen zu benutzen.

3. Vorrichtung gemäß Anspruch 2, dadurch gekennzeichnet, daß die Rinne und der gelenkige Teil (12) bei der Einführung des Gewächses durch ein Drehelement wie eine Nockenscheibe oder eine Welle (17) mit quadratischem Querschnitt oder variablem Profil gespreizt werden.

4. Vorrichtung gemäß irgendeinem der vorhergehenden Ansprüche, dadurch gekennzeichnet, daß während der Versetzungsphase die Rinne mittels eines versenkbaren Anschlags (18) in vertikaler Position gehalten wird.

5. Vorrichtung gemäß irgendeinem der vorhergehenden Ansprüche, dadurch gekennzeichnet, daß der seitliche Auswerfer (13') in vertikaler Richtung gleitet.

6. Vorrichtung gemäß Anspruch 5, dadurch gekennzeichnet, daß der Auswerfer (13') mit dem gelenkigen Teil (12) fest verbunden ist.

7. Vorrichtung gemäß Anspruch 6, dadurch gekennzeichnet, daß der seitliche Auswerfer (13') durch eine vertikale Stange (20) gebildet wird, die in einer Halterung (21) gleitet, welche an dem gelenkigen Teil (12) befestigt ist, wobei die vertikale Stange an ihrem oberen Ende in einem Ansatz (22) mit abgerundetem Kopf endet oder eine Rolle trägt, auf die eine Nocke (24), ein Hebel oder ein Drücker einwirkt und das Absenken der vertikalen Stange verursacht, die durch ein Rückholmittel (23) in die obere Ruhestellung zurückgebracht wird, diese an ihrem unteren Teil zwei Stangen (14') trägt, die ausgelegt sind, um in die zwischen dem U-förmigen Teil des Setzelementes (11) und dem gelenkigen Teil (12) angeordneten Schlitze (15) einzugreifen.

8. Vorrichtung gemäß Anspruch 7, dadurch gekennzeichnet, daß das Rückholmittel (23) aus einer auf der vertikalen Stange (20) zwischen der Halterung (21) und dem Ansatz (22) aufgesteckten Feder besteht.

9. Vorrichtung gemäß irgendeinem der Ansprüche 1 bis 4, dadurch gekennzeichnet, daß der seitliche Auswerfer (13), der die beiden Stangen (14) trägt, um eine Achse schwingt, deren Position und die Länge der Stangen (14) so festgelegt sind, daß das Ende dieser Stangen auf den Erdballen (6) drücken kann, ohne die Gefahr den Blatteil (7) zu beschädigen.

10. Vorrichtung gemäß Anspruch 9, dadurch gekennzeichnet, daß die Stangen (14) flexibel sind, ursprünglich gespreizt auf eine Weise, um beim Eindringen in das Setzelement (11) auf jeder Seite des gelenkigen Teils vorbeizugehen, dann angenähert in niedriger Position (Bezugspunkt 14') aufgrund der Aktion einer zylindrischen Muffe (9), oder ein gleichwertiges System, die in axialer Richtung längs des Auswerfers (13) gleitet, auf eine Weise die erneute Zentrierung des Setzlings (2) zu bewirken.

11. Vorrichtung gemäß irgendeinem der vorhergehenden Ansprüche, dadurch gekennzeichnet, daß mehrere parallele Setzrampen (25), jeweils zusammengesetzt aus mehreren Setzelementen (11) auf das selbe Gestell montiert sind, die Setzelemente einer Setzrampe in Bezug auf die nächstliegende Setzrampe versetzt angeordnet sind, die Setzrampen gleichzeitig oder wechselweise arbeiten, die Setzlinge in aufeinanderfolgenden, versetzten Reihen des gleichen Pflanzungsbereichs gepflanzt werden und die Setzrampen von zwei Ladeplatten (27, 28) aus versorgt werden, die beidseitig der Rampeneinheit (25) angeordnet sind, um zu ermöglichen, diese ohne seitliche Verschiebungen zu betreiben.

12. Vorrichtung gemäß Anspruch 11, dadurch gekennzeichnet, daß die beiden Ladeplatten (27, 28) jeweils eine Anzahl von in der Längsrichtung verschiedenen Zellen aufweisen und sich in gegenläufiger Richtung bewegen.
